## Europäisches Patentamt

## European Patent Office

## Office européen des brevets

(19)

(11) Veröffentlichungsnummer: **0 126 385**
**B1**

(12) # EUROPÄISCHE PATENTSCHRIFT

(45) Veröffentlichungstag der Patentschrift:
**14.09.88**

(51) Int. Cl.⁴: **F 16 K 31/145**, F 16 K 31/46,
F 16 K 31/08

(21) Anmeldenummer: **84105275.6**

(22) Anmeldetag: **10.05.84**

(54) **Servoventil, insbesondere für die Wasserversorgung von Waschmaschinen etc.**

(30) Priorität: **13.05.83 DE 3317405**
**22.02.84 DE 3406394**

(43) Veröffentlichungstag der Anmeldung:
**28.11.84 Patentblatt 84/48**

(45) Bekanntmachung des Hinweises auf die Patenterteilung:
**14.09.88 Patentblatt 88/37**

(84) Benannte Vertragsstaaten:
**AT BE CH DE FR GB IT LI NL SE**

(56) Entgegenhaltungen:
**CH - A - 99 110**
**DE - A - 1 775 108**
**DE - A - 2 808 348**
**DE - A - 3 027 351**
**DE - B - 2 435 256**
**FR - A - 738 324**
**FR - A - 2 311 239**
**US - A - 4 360 038**

(73) Patentinhaber: **FRIEDRICH GROHE ARMATURENFABRIK GmbH & CO, Hauptstrasse 137, D-5870 Hemer 1 (DE)**

(72) Erfinder: **Körfgen, Harald, Elsternweg 5, D-5800 Hagen 5 (DE)**
Erfinder: **Gelpel, Werner, Zur Sonnenhöhe 81, D-5860 Iserlohn (DE)**
Erfinder: **Heimann, Bruno, Bredde 20, D-5758 Fröndenberg-Ardey (DE)**
Erfinder: **Hirsch, Heinz, Batenhorstweg 3, D-4770 Soest (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Servoventil mit den im Oberbegriff des Anspruchs 1 angegebenen Merkmalen.

Aus der Druckschrift DE-A-2 808 348 ist ein derartiges Ventil bekannt. Hierbei ist als Absperrorgan für einen zusätzlichen Verbraucher ein Pilotventil vorgesehen, welches über einen mit einer Mischbatterie verbundenen Bowdenzug betätigbar ist. Die Ausbildung des Pilotventils ist jedoch nicht näher offenbart.

Ferner ist in der Druckschrift DE-A-1 775 108 ein Servoventilelement gezeigt, bei dem ein Hauptventil durch ein Steuerventil betätigt wird und im Steuerventil ein in Schliessstellung gestrammter Ventilkörper angeordnet ist. Zur Betätigung des Steuerventils ist ein verschiebbarer Permanentmagnet vorgesehen.

Der Erfindung liegt die Aufgabe zugrunde, ein mit einfachen Mitteln herstellbares, manuell und ohne Fremdenergiequelle betätigbares Servoventil zu schaffen, dessen Betätigungseinrichtung besonders geeignet ist für die Anordnung in Wasch- und Spültischen, Sanitärarmaturen etc.

Diese Aufgabe wird erfindungsgemäss durch die im kennzeichnenden Teil des Anspruchs 1 angegebenen Merkmale gelöst.

Weitere Ausgestaltungen der Erfindung sind in den Ansprüchen 2 bis 7 angegeben.

Ausführungsbeispiele der Erfindung sind in der Zeichnung dargestellt und werden im folgenden näher erläutert. Es zeigt

Figur 1 ein Servoventil in schematischer Darstellung im Längsschnitt in geöffneter Ventilstellung;

Figur 2 ein weiteres Servoventil in Seitenansicht, teilweise geschnitten;

Figur 3 einen Gehäusedeckel der Betätigungseinrichtung gemäss dem Ventil in Figur 2 in Draufsicht.

Der Einfachheit halber sind bei den Ausführungsbeispielen in der Zeichnung gleiche oder entsprechende Elemente mit jeweils gleichen Bezugszeichen versehen.

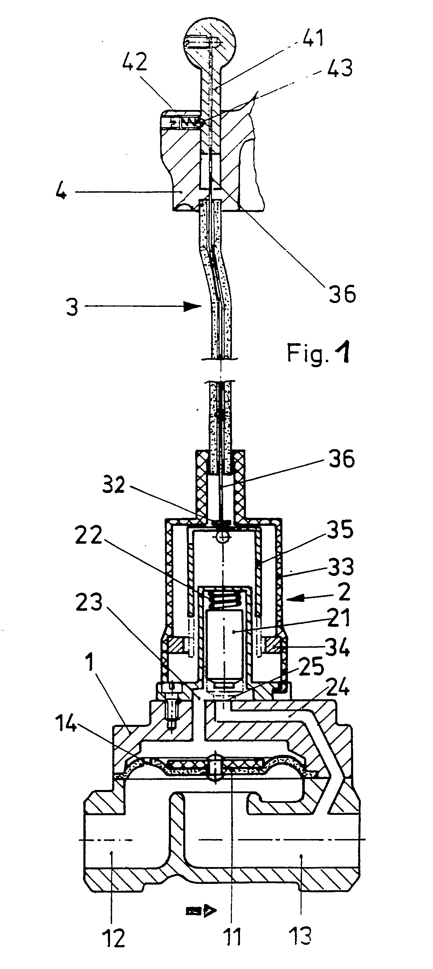

Bei dem in Figur 1 dargestellten Servoventil ist ein bei Elektromagnetventilen gebräuchliches Ventilgehäuse 1 mit einem als Membrane ausgebildeten Hauptventilglied 11 sowie einem Wasserzufluss 12 und einem Wasserabfluss 13 versehen. Oberhalb des Hauptventilglieds 11 ist ein Steuerventil 2 angeordnet, welches im wesentlichen von einem zylindrischen, in einer Bohrung des Gehäuses 1 geführten und von einer Feder 22 in Schliessstellung gestrammten Ventilkörper 21 gebildet wird. Das Steuerventil 2 ist über eine Drosselöffnung 14 mit dem Wasserzufluss 12 verbunden, wobei der Ventilkörper 21 mit einem zwischen einem Zuströmkanal 23 und einem Abströmkanal 24 gelegenen Ventilsitz 25 zusammenwirkt.

Wird der Ventilkörper 21 von dem Ventilsitz 25 abgehoben, so kann Flüssigkeit oberhalb des als Membrane ausgebildeten Hauptventilglieds 11 über den Abströmkanal 24 in den Wasserabfluss 13 einströmen, so dass der Druck in diesem Bereich sinkt und das Hauptventilglied 11 durch den im Wasserzufluss herrschenden Druck angehoben und somit das Hauptventilglied 11 in seine Offenstellung gebracht wird. Wird dagegen der Ventilkörper 21 auf den Ventilsitz 25 zurückgeführt, so wird der Abströmkanal 24 abgesperrt und hierdurch der Druck oberhalb des Hauptventilgliedes 11 erhöht, so dass nunmehr aufgrund der grösseren Wirkfläche das Hauptventilglied 11 in Schliessstellung gebracht wird.

Der Ventilkörper 21 ist ausserdem gekapselt in dem Ventilgehäuse 1 angeordnet. Es ist somit eine gegen Undichtigkeiten anfällige Verbindung zur Atmosphäre nicht erforderlich. In einer Steueranschlusshülse 33 ist konzentrisch zu dem Ventilkörper 21 ein ringförmiger Dauermagnet 34 angeordnet. Der Dauermagnet 34 ist so ausgelegt, dass der Ventilkörper 21 entgegen der Kraft der Feder 22 in Offenstellung gehalten wird.

Zur Betätigung des Steuerventils 2 ist ein Bowdenzug 3 mit seinem Stellseil 36 über eine Steueranschlusshülse 33 mittels Bowdenzugkupplung 32 mit einer Ablenkbuchse 35 verbunden. Das andere Ende des Bowdenzugs 3 ist an einer zum Teil dargestellten Wasserzapfarmatur 4 gehalten, wobei das in dem Bowdenzug 3 gelagerte Stellseil 36 mit einem in der Wasserzapfarmatur 4 geführten Stellgriff 41 verbunden ist. Die Ablenkbuchse 35 ist konzentrisch zum Dauermagneten und dem Ventilkörper 21 angeordnet und die Betätigungseinrichtung so bemessen, dass bei der Geschlossenstellung des Stellgriffs 41 die Ablenkbuchse 35 in den Luftspalt zwischen dem Dauermagnet 34 und dem Ventilkörper 21 eingeschoben ist und somit das Magnetfeld ablenkt, so dass die Feder 22 den Ventilkörper 21 in Schliessstellung strammt. Wird dagegen die Ablenkbuchse 35 durch den Stellgriff 41 über den Bowdenzug aus dem Wirkbereich des Dauermagneten 34 herausgezogen, so gelangt wiederum die volle magnetische Kraft auf den Ventilkörper 21 und führt diesen in die Öffnungsstellung entgegen der Federkraft.

Neben der Anordnung einer Anlenkbuchse 35 können selbstverständlich auch andere Ausgestaltungen vorgesehen werden. So kann z.B. der Dauermagnet 34 in der Steueranschlusshülse 33 direkt von dem Bowdenzug 3 bewegt werden. Durch eine translatorische Bewegung des Stellgriffs 41 kann somit das an einer beliebigen Stelle installierte Servoventil betätigt werden. Zur Sicherung der Offenstellung ist ausserdem in der Wasserzapfarmatur ein Arretiermittel, z.B. eine radial mittels Feder gegen die Mantelfläche gestrammte Kugel, vorgesehen, das mit Hilfe der in der Mantelfläche des Stellgriffs 41 ausgebildeten Rast 43 den Stellgriff 41 in Offenstellung hält.

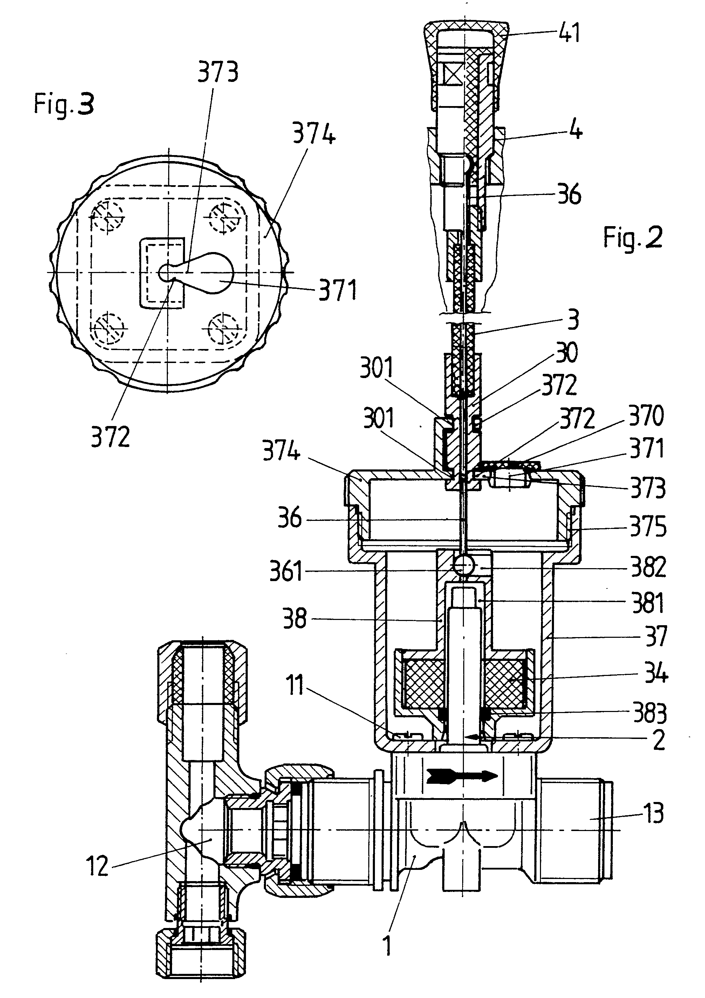

In den Figuren 2 und 3 ist ein anderes Ausführungsbeispiel dargestellt, wobei im wesentlichen die Betätigungseinrichtung für das Ventil modifiziert ist.

Das Steuerventil 2 ist ebenfalls gekapselt ausgebildet, wobei der Ventilkörper und die Schliessfeder in einem etwa zylindrisch ausgebildeten Gehäuseteil angeordnet sind. Auf diesem zylindri-

schen Gehäuseteil ist ein Betätigungsglied 38 mit einem ringförmig ausgebildeten Dauermagnet 34 mittels einer Bohrung 381 axial verschiebbar gelagert. Damit ein ungewolltes Verschieben des Betätigungsgliedes 38 auf dem zylindrischen Gehäuseteil unterbunden ist, ist in der Bohrung 381 ein flexibler Ring 383 angeordnet, dessen Reibung so bemessen ist, dass das Betätigungsglied 38 in der jeweils gewünschten Axialstellung verharrt.

Konzentrisch zu dem Steuerventil 2 ist ein topfartiges Gehäuse 37 mit Schrauben 11 zusammen mit dem Steuerventil 2 auf dem Ventilgehäuse 1 befestigt, welches das Betätigungsglied 38 umschliesst. Das Gehäuse 37 ist an der vorstehenden Stirnseite mit einem mittels Gewinde 375 befestigbaren Deckel 374 verschlossen. Der Deckel 374 weist eine Einführungsbohrung 371 auf, die mit einem Stopfen 370 verschliessbar ist. Im Zentrum des Deckel sind axial zueinander versetzt zwei parallel liegende Schnapphalterungen 372 ausgebildet und im Bereich des Deckels mit der Einführungsbohrung 371 über einen Schlitz 373 verbunden.

In diese Schnapphalterungen 372 ist ein Bowdenzug 3 mit einem Passstück 30 einschnappbar. Der Bowdenzug 3 wird dabei mit seinem Passstück 30 durch die Einführungsbohrung 371 in den Deckel 374 eingeführt und das Stellseil 36 mit einem Querstift 361 in einem Radialschlitz 382 des Betätigungsgliedes 38 eingeschoben. Danach wird das Passstück 30 mit seinen Ringnuten 301 radial durch den Schlitz 373 in die Schnapphalterungen 372 eingedrückt, so dass das Passstück 30 in dieser Stellung sicher fixiert ist. Die Einführungsbohrung 371 kann hiernach mit dem Stopfen 370 verschlossen werden, wobei der Stopfen mit einem überstehenden Kragen durch den freiliegenden Schlitz 373 abdeckt und damit zusätzlich auch noch die untere Schnapphalterung 372 sichert.

Hiernach ist die mechanische Betätigungseinrichtung gegen Spritzwasser, Verschmutzung etc. gekapselt und betriebsbereit. Wird an dem Stellgriff 41 einer nicht näher dargestellten Wasserzapfarmatur 4 gezogen, so wird über das Stellseil 36 des Bowdenzuges 3 das Betätigungsglied 38 axial verschoben und somit der mit dem Dauermagnet 34 gekoppelte Ventilkörper des Steuerventils 2 entsprechend in Offenstellung bewegt. Wird nun der Stellgriff 41 von der Bedienungsperson losgelassen, so verharrt die Stelleinrichtung aufgrund der vorgegebenen Schwergängigkeit in dieser Stellung, so dass das Servoventil sicher in der Offenstellung gehalten wird. Soll dagegen das Servoventil abgesperrt werden, so ist lediglich der Stellgriff 41 bis zum Anschlag in die Wasserzapfarmatur 4 einzuschieben.

Mit diesem Ausführungsbeispiel wird insbesondere erreicht, dass das als Bowdenzug ausgebildete Betätigungsgestänge sehr einfach zu montieren ist und alle beweglichen Teile mit relativ einfachen Mitteln gekapselt angeordnet werden können. Durch die Kapselung der Betätigungseinrichtung und der Anordnung eines elastischen Ringes im Lagerbereich des auf dem Steuerventil verschiebbar gelagerten Betätigungsgliedes, mit dem durch eine bestimmte Schwergängigkeit ein selbsttätiges Verschieben unterbunden ist, wird eine langlebige und sicher zu betätigende Stelleinrichtung geschaffen.

## Patentansprüche

1. Servoventil, insbesondere für den Wasserleitungsanschluss einer Haushaltwasch- oder -spülmaschine, mit einem Hauptventilglied (11), das durch ein Steuerventil (2) betätigt wird, wobei das Steuerventil (2) mit einem Stellgriff (41) über einen Bowdenzug (3) betätigbar ist, dadurch gekennzeichnet, dass

a) im Steuerventil (2) ein in Schliessstellung gestrammter und im Ventilgehäuse (1) gekapselter Ventilkörper (21) angeordnet ist,

b) der Stellgriff (41) über den Bowdenzug (3) mit einem Dauermagneten (34) zusammenwirkt, der ausserhalb des Ventilgehäuses (1) die Kapsel umfasst und die Stellbewegung auf den Ventilkörper (21) überträgt und

c) eine Arretierungseinrichtung (42, 43) im Bereich des Betätigungsgriffs (41) oder des Ventilgehäuses (1) vorgesehen ist, mit der der Ventilkörper (21) entgegen der Schliesskraft einer Feder (22) in Offenstellung fixierbar ist.

2. Servoventil nach Anspruch 1, dadurch gekennzeichnet, dass der Dauermagnet (34) den Ventilkörper (21) entgegen der Kraft einer Feder (22) in Offenstellung rückt und an dem Bowdenzug (3) eine Ablenkbuchse (35) angeordnet ist, die zwischen Dauermagnet (34) und Ventilkörper (21) zur Ablenkung des Magnetfeldes schiebbar ist, so dass durch die Magnetfeldablenkung die Feder (22) den Ventilkörper (21) in Schliessstellung drückt.

3. Servoventil nach Anspruch 1 oder 2, dadurch gekennzeichnet, dass der Stellgriff (41) an einer Wasserzapfarmatur (4) angeordnet ist.

4. Servoventil nach wenigstens einem der Ansprüche 1 bis 3, dadurch gekennzeichnet, dass zur Befestigung und Verbindung des Bowdenzugs (3) mit einem Steuerventil (2) an der Stirnseite eines, das Steuerventil (2) umfassenden Gehäuses (37) eine verschliessbare Einführungsöffnung (371) vorgesehen ist, von der der Bowdenzug (3) mit einem, wenigstens einer Ringnute (301) aufweisenden Passstück (30) radial durch einen Schlitz (373) in eine Schnapphalterung (372) zur Fixierung des Bowdenzugschlauches eindrückbar ist.

5. Servoventil nach Anspruch 4, dadurch gekennzeichnet, dass parallel zur ersten Schnapphalterung (372) eine zweite Schnapphalterung (372) axial vorkragend an der Stirnseite des Gehäuses (37) zur Aufnahme des Passstücks (30) angeordnet ist und der Ventilkörper oder ein Betätigungsglied (38) mit einem Radialschlitz (382) versehen ist, in dem das Bowdenzugseil (36) mit einem Querstift (361) axial fixierbar ist.

6. Servoventil nach wenigstens einem der Ansprüche 1, 3 bis 5, dadurch gekennzeichnet, dass der Dauermagnet (34) in dem Betätigungsglied (38) angeordnet ist, welches mit einer zentralen Bohrung (381) auf dem zapfenförmigen Gehäuse für das Steuerventil (2) verschiebbar mit einem flexiblen Ring (383), z.B. O-Ring, gelagert ist, derart, dass das Betätigungsglied (38) nach einer Betätigung in der jeweils gewünschten Stellung durch die Reibung des Ringes (383) verharrt.

7. Servoventil nach wenigstens einem der Ansprüche 1 bis 6, dadurch gekennzeichnet, dass das Gehäuse (37) topfartig ausgebildet und konzentrisch zum Steuerventil (2) mit Schrauben (11) zusammen mit dem Steuerventil (2) auf dem Ventilgehäuse (1) befestigt ist, wobei die vorstehende Stirnseite des Gehäuses (37) mit einem abnehmbaren Deckel (374) versehen ist, an dem die Einführungsöffnung (371) und die Schnapphalterungen (372) ausgebildet sind.

## Claims

1. Servo valve, especially for the plumbing connection of a domestic washing machine or dishwasher, having a main valve member (11) which is actuated by a control valve (2), wherein the control valve (2) is operable by an operating lever (41) by way of a Bowden control (3), characterized in that

a) in the control valve (2) there is arranged a valve body (21) which is held in the closed position and totally enclosed in the valve housing (1),

b) the operating lever (41) acts by way of the Bowden control (3) in conjunction with a permanent magnet (34) which surrounds the enclosure, outside the valve housing (1), and transfers the control movement to the valve body (21) and

c) an arresting arrangement (42, 43) is provided in the region of the operating lever (41) or of the valve housing (1), with which arresting arrangement the valve body (21) can be fixed in the open position against the closing force of a spring (22).

2. Servo valve according to claim 1, characterized in that the permanent magnet (34) moves the valve body (21) against the force of a spring (22) into the open position and on the Bowden control (3) there is arranged a deflection sleeve (35) which can be inserted between the permanent magnet (34) and valve body (21) to deflect the magnetic field so that, as a result of the magnetic field being deflected, the spring (22) urges the valve body (21) into the closed position.

3. Servo valve according to claim 1 or 2, characterized in that the operating lever (41) is arranged on a water tap fitting (4).

4. Servo valve according to at least one of claims 1 to 3, characterized in that to fasten and join the Bowden control (3) to a control valve (2) there is provided on the end face of a housing (37) enclosing the control valve (2) a closable admission aperture (371) from which the Bowden control (3) with an intermediate member (30) having at least one annular groove (301) can be pressed radially through a slot (373) into a snap-fit holding device (372) for fixing the Bowden control cable.

5. Servo valve according to claim 4, characterized in that parallel to the first snap-fit holding device (372) there is arranged a second snap-fit holding device (372) projecting axially at the end face of the housing (37) for receiving the intermediate member (30), and the valve body or an operating member (38) is provided with a radial slot (382) in which the Bowden control cable (36) is axially fixable with a transverse pin (361).

6. Servo valve according to at least one of claims 1, and 3 to 5, characterized in that the permanent magnet (34) is arranged in the operating member (38) which is displaceably mounted on the peg-shaped housing for the control valve (2) by means of a central bore (381) with a flexible ring (383), for example an O-ring, in such a manner that, after actuation, the operating member (38) remains in the desired position in each case as a result of the friction of the ring (383).

7. Servo valve according to at least one of claims 1 to 6, characterized in that the housing (37) is of pot-shaped construction and is· fixed using screws (11) to the valve housing (1), together and concentrically with respect to the control valve (2), wherein the projecting end face of the housing (37) is provided with a removable cover (374) on which the admission opening (371) and the snap-fit holding devices (372) are provided.

## Revendications

1. Servo-soupape, notamment pour le raccordement à une conduite d'eau d'une machine à laver ou à rincer à usage domestique, comportant un organe de soupape principal (11), qui est actionné par une soupape de commande (2), cette soupape de commande (2) pouvant se manœuvrer au moyen d'une poignée de réglage (41) par l'intermédiaire d'un câble Bowden (3), servo-soupape caractérisée en ce que:

a) dans la soupape de commande (2) est monté un corps de soupape (21) enfermé par une capsule dans le carter de soupape (1) est assujetti en position de fermeture,

b) la poignée de réglage (41) coopère, par l'intermédiaire du câble Bowden (3), avec un aimant permanent (34), qui entoure la capsule en-dehors de la cage de soupape (1) et transmet le mouvement de réglage au corps de soupape (21), et

c) il est prévu dans la zone de la poignée de manœuvre (41) ou de la cage de soupape (1) un dispositif de blocage (42, 43), par lequel le corps de soupape (21) peut être fixé en position d'ouverture contre la force de fermeture d'un ressort (22).

2. Servo-soupape selon la revendication 1, caractérisée en ce que l'aimant permanent (34) a pour effet de pousser le corps de soupape (21) en position d'ouverture contre la force d'un ressort (22), et sur le câble Bowden (3) est monté un manchon de déviation (35), qui peut coulisser entre l'aimant permanent (34) et le corps de soupape (21) pour faire dévier le champ magnétique de telle sorte, que, sous l'effet de la déviation du champ magnétique, le ressort (22) pousse le corps de soupape (21) en position de fermeture.

3. Servo-soupape selon la revendication 1 ou 2, caractérisée en ce que la poignée de réglage (41) est montée sur une armature (4) de prise d'eau.

4. Servo-soupape selon l'une au moins des revendications 1 à 3, caractérisée en ce que, pour fixer et relier le câble Bowden (3) à une soupape de commande (2) sur la face frontale d'un carter (37) entourant cette soupape de commande (2), il est prévu un orifice d'introduction (371) pouvant être fermé, à partir duquel le câble Bowden (3) peut, avec une pièce d'ajustage (30) présentant au moins une gorge annulaire (301), être enfoncé en direction radiale, à travers une fente (373), dans un dispositif d'encliquetage (372) pour assurer la fixation du tuyau du câble Bowden.

5. Servo-soupape selon la revendication 4, caractérisée en ce que, parallèlement au premier dispositif d'encliquetage (372), un second dispositif d'encliquetage (372) est monté en saillie en direction axiale au-dessus de la face frontale du carter (37) pour recevoir la pièce d'ajustage (30), et le corps de soupape ou un organe d'actionnement (38) est pourvu d'une fente radiale (382) dans laquelle le câble (36) peut être fixé axialement par une cheville transversale (361).

6. Servo-soupape selon l'une au moins des revendications 1, 3 à 5, caractérisée en ce que l'aimant permanent (34) est disposé dans l'organe d'actionnement (38) qui, en pouvant coulisser par un alésage central (381) sur le boîtier de forme cylindrique prévu pour la soupape de commande (2), est monté avec un anneau flexible (383), par exemple un anneau torique, de telle manière, que cet organe d'actionnement (38) reste fixé, sous, l'effet de la friction de l'anneau (383), après une manœuvre, dans la position à chaque fois désirée.

7. Servo-soupape selon l'une au moins des revendications 1 à 6, caractérisée en ce que le carter (37) est constitué dans le genre d'un pot et est fixé sur le carter de soupape (1), concentriquement par rapport à la soupape de commande (2), avec des vis (11), conjointement avec cette soupape de commande (2), la face frontale en saillie du carter (37) étant munie d'un couvercle (374) amovible, sur lequel sont prévus l'orifice d'introduction (371) et les dispositifs d'encliquetage (372).

Fig. 1

Fig.3

Fig.2